# EUROPÄISCHE PATENTSCHRIFT

(11) **EP 2 814 660 B1**
(45) Veröffentlichungstag und Bekanntmachung des Hinweises auf die Patenterteilung: **06.07.2016**
(21) Anmeldenummer: 14705039.7
(22) Anmeldetag: 14.02.2014
(51) Int. Cl.: F16L 9/21, F16L 9/22, F24F 13/02, B64D 13/00, B29C 53/38, B29C 65/50, B60H 1/00

(54) **HYBRIDBAUTEIL UND HERSTELLUNGSVERFAHREN**
HYBRID COMPONENT AND PRODUCTION METHOD
COMPOSANT HYBRIDE ET SON PROCÉDÉ DE FABRICATION

(30) Priorität: 20.02.2013 DE 102013002893
(43) Veröffentlichungstag der Anmeldung: 24.12.2014
(73) Patentinhaber: Diehl Aircabin GmbH, 88471 Laupheim (DE)
(72) Erfinder: HÖFLE, Roland, 88045 Friedrichshafen (DE); GERNER, Ralf, 89264 Weissenhorn (DE); PFINDER, Dirk, 88481 Balzheim (DE)
(74) Vertreter: Diehl Patentabteilung
(86) Internationale Anmeldenummer: PCT/EP2014/000413
(87) Internationale Veröffentlichungsnummer: WO 2014/127899

(56) Entgegenhaltungen:
- DE-A1-102005 023 148
- US-A1- 2007 292 647

## Beschreibung

Die vorliegende Anmeldung betrifft insbesondere ein Hybridbauteil und ein entsprechendes Herstellungsverfahren.

Ein solches Hybridbauteil ist aus der US 2007/0292647 A1 bekannt. Insbesondere im Bereich der Luftfahrt, sowie auch in anderen Bereichen der Personen- und Güterbeförderung und ist das Gewicht der zum Bau entsprechender Fahrzeuge verwendeter Bauteile eine entscheidende bzw. nicht zu vernachlässigende Größe. Gerade im Hinblick auf die Verbesserung der Energieeffizienz ist es ein laufendes Bestreben, Bauteilgewichte so weit wie möglich zu verbessern, d. h. zu verringern.

Im Bereich der Luftfahrt werden unter anderem faserverstärkte Kunststoffe, teilweise mit einem Wabenkern, als Leichtbauteile für Kabinenverkleidungselemente, Klimarohre usw. verwendet. Obgleich diese Bauteile bereits vergleichsweise leichtgewichtig sind, wäre eine weitere Gewichtsreduktion dennoch wünschenswert.

Ausgehend davon ist es eine Aufgabe der Erfindung, die Nachteile nach dem Stand der Technik zu beseitigen. Insbesondere soll ein im Vergleich zu bekannten Leichtbauteilen gewichtsreduziertes, und dennoch mechanisch ausreichend stabiles Bauteil für Fahrzeuge angegeben werden.

Diese Aufgabe wird gelöst durch die unabhängigen und nebengeordneten Ansprüche. Ausgestaltungen ergeben sich insbesondere aus den abhängigen Ansprüchen und Unteransprüchen.

Unter laminatfrei soll insbesondere verstanden werden, dass der Oberflächenabschnitt frei von Laminat ausgebildet ist. Das soll insbesondere bedeuten, dass ein Oberflächenabschnitt des Kunststoffschaummaterials frei von einer Verbindung mit Faserverbundkunststoff ist, insbesondere frei liegt. Bei dem Oberflächenabschnitt handelt es sich bevorzugt um einen äußeren Oberflächenabschnitt, d. h. insbesondere nicht um einen Abschnitt einer inneren Kavität oder eines inneren geschlossenen Volumens des Hybridbauteils. Bevorzugt grenzt der laminatfreie Oberflächenabschnitt unmittelbar an den als Laminat ausgebildeten Abschnitt an. Mithin ergibt sich insbesondere ein vergleichsweise leichtgewichtiges Hybridbauteil.

Das vorgeschlagene Hybridbauteil kann insoweit umfassen einen im Wesentlichen aus einem Kunststoffschaum gebildeten Grundkörper, welcher lokal, insbesondere in einem oder mehreren vorgegebenen Abschnitten, die zusammen jedoch nicht den Grundkörper ausbilden, mit einem Faserverbundkunststoff verbunden, insbesondere verklebt, ist. Hier soll erwähnt werden, dass das Kunststoffschaummaterial bei dem hierin vorgeschlagenen Hybridbauteil nicht für den gesamten Grundkörper als Kernmaterial ausgebildet ist, was gleichbedeutend damit ist, dass es laminatfreie Bereiche, insbesondere Oberflächenbereiche gibt.

Unter dem Begriff Laminat soll insbesondere verstanden werden, dass der zumindest eine Abschnitt einen Schichtaufbau aus mehreren miteinander verklebten Schichten aufweist, wobei die einzelnen Schichten dabei entweder aus Kunststoffschaum, insbesondere aus einem plattenartigen Kunststoffschaummaterial, oder aus Faserverbundkunststoff gebildet sind.

Für das Hybridbauteil ergeben sich dabei durch Lamination mit dem Faserverbundkunststoff insbesondere Möglichkeiten zur lokalen mechanischen Verstärkung des Kunststoffschaummaterials des Grundkörpers. Es hat sich herausgestellt, dass die lokale Applikation der Faserverbundkunststoffs insbesondere für Rohre, insbesondere Be- und Entlüftungsrohre, insbesondere Klimarohre, ausreichend ist, insbesondere im Hinblick auf mechanische Stabilität. Wegen der lokalen Applikation des Faserverbundkunststoffe durch Lamination gibt es bei einem auf Basis des Kunststoffschaummaterials hergestellten Grundkörper Bereiche, eben Oberflächenbereiche, des Kunststoffschaummaterials, die frei liegen, d.h. nicht von Faserverbundkunststoff bedeckt und laminiert sind. Insoweit können Bereiche vorhanden sein, die vollständig bzw. ausschließlich aus dem Kunststoffschaum gebildet sind. Das ist insbesondere von Vorteil im Hinblick auf geringe Bauteilgewichte. Bevorzugt ist der Kunststoffschaum zumindest in den frei liegenden Bereichen geschlossenzellig ausgebildet.

Durch die lokalen Bereiche mit Laminat, d.h. die partielle Belegung und Lamination mit dem Faserverbundkunststoff, können gezielt Verstärkungsbereiche ausgebildet werden, um so die jeweils erforderlichen mechanischen Eigenschaften und Anforderungen, insbesondere hinsichtlich Formstabilität, und viskoelastischer Eigenschaften, zu erreichen bzw. einhalten zu können.

Die einzelnen Bestandteile des Laminats, insbesondere die Schichten, sind dabei insbesondere durch Stoffschluss miteinander verbunden, insbesondere verklebt. Die stoffschlüssige Verbindung kann dabei insbesondere durch das Kunststoffmaterial des Faserverbundkunststoffs bewirkt sein. Möglich ist jedoch auch die Verwendung eines anderen, geeigneten Klebstoffs, insbesondere eines Klebstoffs mit dem Abschnitte oder Segmente des Kunststoffschaummaterials miteinander verklebt werden können.

Durch die Verwendung eines Kunststoffschaums kann insbesondere ein gegenüber bekannten Leichtbaumaterialien, bei welchen Faserverbundkunststoffe entweder als Vollmaterial oder in Kombination Wabenkernen verwendet werden, verringertes Gewicht erreicht werden.

Ferner können durch die Kombination des Kunststoffschaums mit dem Faserverbundkunststoff zu einer Laminatstruktur eine besonders vorteilhafte mechanische Festigkeit, insbesondere Zugfestigkeit, und Formstabilität erreicht werden. Außerhalb des zumindest einen, als Laminat ausgebildeten Abschnitts sind die viskoelastischen Eigenschaften des Kunststoffschaummaterials im Wesentlichen erhalten, während im Bereich des Laminats die viskoelastischen Eigenschaften eingegrenzt sind.

Die Beschränkung bzw. Eingrenzung der viskoelastischen Eigenschaften führt insbesondere zu einer erhöhten Steifigkeit des Grundkörpers, was zur Verbesserung der Formstabilität führt, insbesondere auch unter Temperatur-, Feuchtigkeits- und/oder Druckschwankungen.

Ein weiterer Vorteil des vorgeschlagenen Hybridbauteils kann darin gesehen werden, dass das Kunststoffschaummaterial im Vergleich zu Bauteilen aus faserverstärkten Kunststoffen in Vollmaterial bzw. in Wabenbauweise einen deutlich kleineren Wärmedurchgangskoeffizienten aufweist, und damit als solches vorteilhafte thermische Isolationseigenschaften aufweist. Je nach Anforderungen kann es möglich sein, dass auf Grund der vorteilhaften Isolationseigenschaften des Kunststoffschaummaterials auf zusätzliche Isolierungen, wie sie etwa bei Klimarohren aus Kunststoffverbundmaterial üblicherweise erforderlich sind, verzichtet werden kann. Insbesondere bei Bauteilen mit Isolationserfordernissen können durch die höhere Bauteilintegrität Vereinfachungen bei der Herstellung und korrespondierend verringerte Herstellungskosten erreicht werden.

In Ausgestaltungen ist vorgesehen, dass der Grundkörper des Hybridbauteils außerhalb des zumindest einen Abschnitts, d. h. etwa im laminatfreien Bereich, im Wesentlichen aus dem Kunststoffschaum bzw. Kunststoffschaummaterial gebildet. Das bedeutet insbesondere, dass der Grundkörper Segmente, die rein aus Kunststoffschaum gebildet sind und Segmente, die als Laminat ausgebildet sind, umfassen kann. Die als Laminat ausgebildeten Segmente, sprich der zumindest eine Abschnitt, kann dabei vorteilhaft die Wirkung einer mechanischen Verstärkung und Stabilisierung übernehmen. Die laminatfreien Segmente, die im Wesentlichen vollständig aus dem Kunststoffschaummaterial gebildet sein können, weisen im Wesentlichen die viskoelastischen Eigenschaften des Kunststoffschaummaterials auf, und zeigen insoweit gegenüber dem Laminat eine höhere Flexibilität und/oder Biegbarkeit. Mit dem zumindest einen als Laminat ausgebildete Abschnitt können insbesondere durch Temperatur, Druck und/oder Feuchtigkeitseinflüsse beim Kunststoffschaummaterial ansonsten beobachtete Formänderungen, insbesondere Längenänderungen, vermieden, zumindest weitestgehend unterdrückt werden. Mit anderen Worten kann in den laminierten Abschnitten eine vergleichsweise hohe Formstabilität erreicht werden, während in den laminatfreien Abschnitten die Flexibilität des Kunststoffschaummaterials erhalten werden kann. In durch das Laminat verstärkter Richtung bzw. Dimension kann also erhöhte Formstabilität erreicht werden, während in unverstärkter Richtung bzw. Dimension erhöhte Flexibilität vorliegt.

In Ausgestaltungen ist vorgesehen, dass der Kunststoffschaum im Wesentlichen aus einem Plastomer, bzw. Thermoplast oder thermoplastischen Kunststoffmaterial gebildet ist. Überraschend hat sich gezeigt, dass geschäumte thermoplastische Kunststoffmaterialien dazu geeignet sind, mit Faserverbundkunststoffen, wie z. B sog. Prepregs, laminiert zu werden. Bei der Lamination kann die Schaumstruktur des Kunststoffschaummaterials im Wesentlichen erhalten werden, oder anders ausgedrückt führt der Laminationsprozess zu keiner relevanten oder maßgeblichen Degeneration des Kunststoffschaummaterials. Als geeignet haben sich insbesondere Schaummaterialien aus PVDF (Polyvinylidenfluorid) und PPSU (Polyphenylensulfon) erwiesen.

In Ausgestaltungen umfasst der Faserverbundkunststoff als Kunststoffmaterial ein (ausgehärtetes) Duromer bzw. einen Duroplasten oder duroplastisches Material. Insbesondere im Laminat mit dem Kunststoffschaummaterial befindet das Duromer im ausgehärteten Zustand, und verstärkt auf diese Weise lokal die mechanische Festigkeit des Hybridbauteils. In Varianten kann der Faserverbundkunststoff als Fasern Glasfasern, Karbonfasern und/oder Aramidfasern umfassen, mit denen insbesondere die Zugfestigkeit des Laminats deutlich verbessert werden kann. Bei der Herstellung des Hybridbauteils können als Faserverbundkunststoffe insbesondere Faser-Matrix-Halbzeuge, insbesondere Prepregs, verwendet werden, bei welchen die Fasern, d. h. Verstärkungsfasern mit einer Matrix aus Kunststoff getränkt sind. In Varianten liegen die Fasern in Form eines Gewebes, Geleges, Gestricks, Gittergewebes und/oder als Vlies vor.

In Ausgestaltungen sind das Kunststoffschaummaterial und das Faserverbundkunststoffmaterial derart gewählt, dass die Schmelztemperatur des Kunststoffschaums größer ist als eine Aushärtungstemperatur des Duromers. Insbesondere in dieser Konstellation kann erreicht werden, dass bei der Aushärtung des Duromers, beispielsweise unter Temperatur und Druck, die Schaumstruktur und damit auch die isolierende Wirkung des Kunststoffschaummaterials erhalten bleibt.

Gemäß der Erfindung ist der Kunststoffschaum 2 luftdicht ausgebildet. Luftdicht soll dabei bedeuten, dass Luft, insbesondere Umgebungsluft, das Kunststoffschaummaterial als solches nicht durchdringen kann. Insbesondere soll das Kunststoffmaterial dicht gegenüber in Luftfahrzeugen vorhandene bzw. verwendete Atemluft sein. Entsprechende Kunststoffschaummaterialien eignen sich insbesondere zur Herstellung von Rohrleitungen oder Rohren für Be- und/oder Entlüftungssysteme und/oder Klimasysteme.

In Ausgestaltungen ist vorgesehen, dass es sich bei dem Kunststoffschaum bzw. Kunststoffschaummaterial um ein geschlossenzelliges Schaummaterial handeln kann. Mit geschlossenzelligen Schaummaterialien können insbesondere vorteilhafte Isolationseigenschaften erreicht werden, Darüber sind solche Materialien in der Regel ausreichend Dicht gegenüber Fluiden, insbesondere Wasser und/oder Luft, so dass sie besonders gut für die Herstellung von Rohren oder Leitungsteilen zur Be- und/oder Entlüftung und/oder Klimatisierung eignen. Darüber hinaus können Oberflächen von geschlossenzelligen Schäumen vergleichsweise gut und wirksam beschichtet werden, beispielsweise mit Lacken und/oder Grundierungsmaterialien für Lackierungen usw..

In Ausgestaltungen ist vorgesehen, dass der Kunststoffschaum eine Dichte zwischen 20 kg/m³ bzw. 30 kg/m³ und 75 kg/m³, bevorzugt zwischen 20 kg/m³ bzw. 30 kg/m³ und 40 kg/m³, weiter bevorzugt zwischen 20 kg/m³ bzw. 30 kg/m³ und 35 kg/m³ oder zwischen 20 kg/m³ und 30 kg/m³ aufweist. Solche Kunststoffschäume zeigen einerseits ausreichende mechanische Festigkeiten, um in Kombination mit dem oder den als Laminat ausgebildeten Abschnitten selbsttragende Bauteile bzw. Strukturen auszubilden. Andererseits ermöglichen sie vergleichsweise geringe Bauteilgewichte, was insbesondere im Bereich der Flugzeugtechnik und Flugzeuginnenausstattungen ein entscheidender Vorteil ist.

In Ausgestaltungen umfasst der zumindest eine Abschnitt ein Segment bei welchem der Faserverbundkunststoff zwischen zwei Lagen aus Kunststoffschaum angeordnet ist. Diese Variante bzw. Ausgestaltung ist Normalenrichtung des Bauteils insoweit durch eine Materialabfolge in Kunststoffschaum-Faserverbundkunststoff-Kunststoffschaum gekennzeichnet. Oder anders ausgedrückt ist zwischen zwei Schichten aus Kunststoffschaum eine Schicht aus Faserverbundkunststoff vorhanden bzw. laminiert. Bei entsprechender Ausgestaltung können insbesondere symmetrische Schichtaufbauten erreicht werden, die eine besonders vorteilhafte Formstabilität, insbesondere auch bei Herstellung des Laminats, aufweisen.

In Ausgestaltungen kann der zumindest eine Abschnitt zumindest ein Segment umfassen, in welchem der Kunststoffschaum zwischen zwei Lagen aus Faserverbundkunststoff angeordnet ist. Hier ergibt sich in Normalenrichtung des Hybridbauteils eine Materialabfolge Faserverbundkunststoff-Kunststoffschaum-Faserverbundkunststoff. Insbesondere mit diesem Aufbau können vorteilhafte Steifigkeiten, Zugfestigkeiten und Formstabilitäten erreicht werden. Abgesehen davon kann auch hier ein symmetrischer Aufbau erreicht werden, der hinsichtlich Formstabilität von Vorteil ist.

In weiteren Ausgestaltungen kann vorgesehen sein, dass zwei stumpf und/oder überlappend an- oder aufeinander gelegene Segmente des Kunststoffschaummaterials im Kontaktbereich der Segmente und darüberhinaus gehend, entweder ein- oder beidseitig, mit einer Schicht oder Lage aus Faserverbundkunststoff überdeckt sind. Insbesondere auf diese Weise, sowie auch mit den beiden vorangehenden Ausgestaltungsvarianten, können mehrere Kunststoffschaumteile zu einem größeren Bauteil verbunden werden, wobei die Verbindung zwischen den einzelnen Kunststoffschaumteilen im Bereich des Laminats und durch das Laminat erfolgen kann. Die Kombination mehrerer Kunststoffschaumteile kann vorteilhafter Weise bei der Herstellung von Bauteilen mit Krümmungen und/oder 3D-Konturen verwendet werden. Denkbar ist es auch, ein als Abwicklung bzw. Vorform bereit gestelltes Kunststoffschaumteil entlang von Kanten und/oder Schnitten durch das Faserverbundkunststoffmaterial im Laminat miteinander zu verbinden, um so insbesondere entsprechend dreidimensional geformte Bauteile zu erhalten.

Der Grundkörper ist zumindest abschnittsweise rohrartig geformt, wobei in dem zumindest einen Abschnitt aufeinander stoßende, insbesondere stumpf aufeinander stoßende, und/oder aufeinander gelegene oder liegende Kontaktflächen des Kunststoffschaums durch den Faserverbundkunststoff miteinander verklebt sind. In dieser Konfiguration können insbesondere Rohre und Leitungsabschnitte hergestellt werden, wobei die Geometrie der Rohre, insbesondere deren Größe, Durchmesser und/oder die Geometrie bzw. der Krümmungsverlauf entlang der Axialachse in weiten Grenzen variiert werden können. Besonders vorteilhaft ist, dass entsprechende Rohre mit nahezu beliebigen Krümmungen hergestellt werden können.

In einer Variante kann der der Grundkörper zwei, zu einem rohrartigen Hohlkörper zusammengesetzte Halbschalen aus dem Kunststoffschaum umfassen, wobei die Halbschalen durch den Faserverbundkunststoff miteinander verklebt bzw. verbunden sind. Insbesondere bei dieser Variante können sich die als Laminat gebildeten Abschnitte im Kontaktbereich der Halbschalen jeweils über die gesamte axiale länge des Grundkörpers erstrecken. Auf diese Weise kann eine besonders vorteilhafte Stabilität in Längsrichtung des Rohrs erreicht werden, insbesondere bei Temperaturschwankungen, Zugbelastungen usw.. In Umfangsrichtung kann der zu einem Rohr geformte Grundkörper umlaufende, als Laminat ausgebildete Abschnitte umfassen. Durch entsprechende, umlaufende Verstärkungen kann, insbesondere lokal, eine vorteilhafte Formstabilität im Querschnitt des Rohrs erreicht werden. Ebenfalls kann durch umlaufende Laminatabschnitte, zumindest lokal, die Querschnittsform bei Bedruckung des Rohrs, d. h. bei Beaufschlagung des Rohrinneren mit einem Druck, wie es z.B. bei Belüftungsleitungen oder Klimatisierungsleitungen der Fall ist, erhalten werden.

In Ausgestaltungen, und wie vorhin im Zusammenhang mit einer Variante bereits erwähnt, kann sich der Faserverbundkunststoff, und damit insbesondere der als Laminat ausgebildet Abschnitt, in zumindest einer Dimension vollständig über die Ausdehnung des Grundkörpers erstrecken. Wie bereits erwähnt können so vorteilhafte Formstabilitäten erreicht werden. Der Faserverbundkunststoff erstreckt sich lokal und axial entlang einer Stoßfuge des Grundkörpers.

Der Faserverbundkunststoff und entsprechend der als Laminat ausgebildete Abschnitt kann insbesondere an jeglichen Stellen oder Segmenten vorgesehen werden, an denen der Grundkörper mechanisch versteift werden soll und/oder an welchen zwei oder mehr Kunststoffschaummaterialien miteinander verbunden werden sollen.

In Ausgestaltungen kann vorgesehen sein, dass der Kunststoffschaum und/oder der Faserverbundkunststoff in dem zumindest ersten Abschnitt in Normalenrichtung des Grundkörpers in der Dicke variiert. Entsprechend können mechanische und/oder viskoelastische Eigenschaften des Grundkörpers eingestellt bzw. variiert werden. In Varianten kann eine Variation der Dicke dadurch gegeben sein, dass der Kunststoffschaum komprimiert ist bzw. wird. Dabei soll unter dem Begriff bzw. der Wortfamilie "komprimieren" insbesondere verstanden werden, dass die in Normalenrichtung des Grundkörpers gemessene Dicke gegenüber einem nicht komprimierten Bereich, der insbesondere außerhalb des als Laminat ausgebildeten Abschnitts gelegen ist, reduziert ist. Insbesondere die Dickenvariation des Kunststoffschaums kann zur Formgebung und/oder zur Ausbildung und Umsetzung spezieller Bauteilformen und -geometrien verwendet werden. Insbesondere lassen sich Dickenunterschiede zwischen Segmenten aus reinem Schaummaterial und Segmenten aus reinem Faserverbundkunstoff in Übergangsbereichen mit entsprechend komprimiertem Schaummaterial überbrücken. Solche Übergangsbereiche und/oder Segmente oder Flächen aus reinem Faserverbundkunststoff können beispielsweise an Bauteilkanten vorgesehen sein und/oder als Flansch, insbesondere Befestigungsflansch, Luftleitfläche und dergleichen ausgebildet sein.

In Ausgestaltungen kann vorgesehen sein, dass sich an zumindest einen als Laminat ausgebildeten Abschnitt, d. h. an zumindest einen des zumindest einen als Laminat gebildeten Abschnitts, ein, insbesondere rein, aus Faserverbundkunststoff gebildeter laminierter Bereich anschließt. Der laminierte Bereich aus Faserverbundkunststoff kann beispielsweise als Flansch, Lasche, Muffe usw. ausgebildet sein. Insbesondere können als Rohre ausgebildete Hybridbauteilen an den Rohrenden entsprechende laminierte Bereiche aus Faserverbundkunststoff aufweisen. Die laminierten Bereiche können verwendet werden, um zwei oder mehrere Rohre miteinander zu einer Rohrleitung zu verbinden.

Nach Patentanspruch 14 ist ein Hybridrohr vorgesehen, insbesondere für Klimatisierungsanwendungen, wobei das Hybridrohr als Hybridbauteil entsprechend der obigen Beschreibung, insbesondere entsprechend einer der oben beschriebenen Ausgestaltungen und Varianten ausgebildet ist. Bei dem Hybridrohr kann es sich insbesondere um ein Klimarohr, insbesondere für Anwendungen in Klimasystemen in Flugzeugen, handeln.

Nach Patentanspruch 15 ist ein Kabinenverkleidungselement für Flugzeugkabinen vorgesehen, wobei das Kabinenverkleidungselement als Hybridbauteil entsprechend der obigen Beschreibung, insbesondere entsprechend einer der oben beschriebenen Ausgestaltungen und Varianten ausgebildet ist. Wegen Vorteilen und vorteilhaften Wirkungen betreffend das Hybridrohr und Kabinenverkleidungselement wird auf die Ausführungen zum Hybridbauteil verwiesen.

Nach Patentanspruch 16 wird ein Herstellungsverfahren für ein Hybridbauteil vorgeschlagen, wobei ein Kunststoffschaumelement und ein Faserverbundkunststoffelement in einem Laminationsprozess miteinander verbunden werden. So kann in vergleichsweise einfache und kostengünstige Weise ein integriertes Bauteil hergestellt werden. Insbesondere können wegen der Verwendung eines Kunststoffschaummaterials mit isolierender Wirkung in einem einzigen Herstellungsschritt thermisch isolierte Bauteile, insbesondere Rohre, hergestellt werden.

Es soll erwähnt werden, dass dem Schaummaterial je nach Bedarf Zusatzstoffe beigemengt sein können, insbesondere um die Eigenschaften des Schaummaterials zu verändern. Beispielsweise könnte das Schaummaterial elektrisch leitfähige Partikel umfassen, um die Leitfähigkeit des Hybridbauteils zu verändern. Das könnte beispielsweise zum Schutz oder zur Vermeidung allzu großer elektrostatischer Aufladungen.

In Ausgestaltungen des Herstellungsverfahrens wird während des Laminationsprozesses das Kunststoffschaumelement und das Faserverbundkunststoffelement mit Temperatur und/oder Druck beaufschlagt, insbesondere derart, dass ein Duromer umfassendes Faserverbundkunststoffelement ausgehärtet wird.

In weiteren Ausgestaltungen des Herstellungsverfahrens kann vorgesehen sein, dass zumindest ein Kunststoffschaumelement in lattenartiger Form bereitgestellt, zugeschnitten und/oder vorgeformt wird, insbesondere in einem Formwerkzeug, und dass zwei Bereiche, insbesondere zwei lose Enden, des zumindest einen Kunststoffschaumelements in einem Laminationsprozess durch ein Faserverbundkunststoffelement, das beim Laminationsprozess aushärtet, miteinander verklebt werden. Ein solches Verfahren kann insbesondere zur Herstellung von Rohren verwendet werden, wobei bei der Rohrherstellung zwei Rohr-Halbschalen aneinander gestoßen, und miteinander verbunden werden können.

Ausführungsformen der Erfindung werden nachfolgend anhand von Figuren näher beschrieben. Es zeigen:
- FIG. 1: eine perspektivische Ansicht eines Hybridrohrs;
- FIG. 2: eine Querschnittsdarstellung des Hybridrohrs;
- FIG. 3: eine Querschnittsdarstellung einer Variante des Hybridrohrs;
- FIG. 4: einen Nahtstellenabschnitt des Hybridrohrs;
- FIG. 5: einen weiteren Nahtstellenabschnitt einer weiteren Variante des Hybridrohrs;
- FIG. 6: eine Seitenansicht eines Abschnitts einer weiteren Variante des Hybridrohrs;
- FIG. 7: eine Seitenansicht eines Abschnitts einer noch weiteren Variante des Hybridrohrs;
- FIG. 8: eine perspektivische Ansicht eines Hybridbauteils; und
- FIG. 9: eine Schnittdarstellung des Hybridbauteils der FIG. 8.

In den Figuren werden gleiche bzw. funktionsgleiche Elemente so weit als möglich mit gleichen Bezugszeichen bezeichnet.

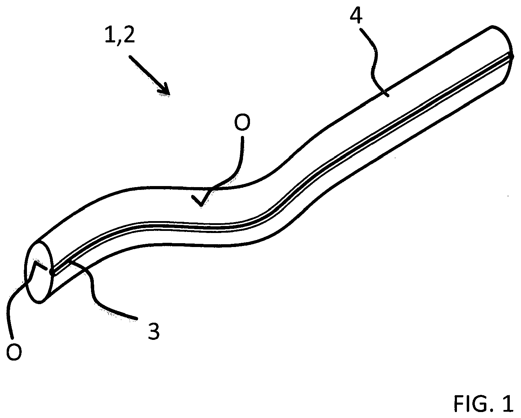

FIG. 1 zeigt eine perspektivische Ansicht eines Hybridrohrs 1. Das Hybridrohr 1 umfasst einen Grundkörper 2, der zumindest einen Abschnitt aufweist, der als Laminat 3 aus einem Kunststoffschaummaterial und einem Faserverbundkunststoff gebildet ist.

Das Hybridrohr 1, im Folgenden kurz auch Rohr 1 genannt, bzw. der Grundkörper 2 ist im Wesentlichen gebildet aus einer zu einem zylindrischen Hohlkörper gebogenen Kunststoffschaumplatte bzw. ebenen Kunststoffschaumkörper, welche/r die Wandung 4 des Hybridrohrs 1 bildet.

Entlang der axial an der Wandung 4 verlaufenden Stoßkante, an welcher die Enden oder Seitenkanten des gebogenen Kunststoffschaumkörpers an- bzw. aufeinanderstoßen, ist das Laminat 3 bzw. der als Laminat ausgebildete Abschnitt ausgebildet, in welchem die Seitenkanten des gebogenen Kunststoffschaumkörpers durch den Faserverbundkunststoff miteinander verklebt sind. Als Faserverbundkunststoff können beispielsweise sog. Prepregs verwendet werden, die unter Beaufschlagung mit Druck und Temperatur ausgehärtet werden können und so durch die Ausbildung des Laminats 3 die Enden des Kunststoffschaumkörpers miteinander verkleben.

Durch die Ausbildung des Laminats 3 kann einerseits eine feste Verbindung der Enden des Kunststoffschaumkörpers erreicht werden und andererseits können die mechanische Festigkeit, die viskoelastischen Eigenschaften, wie die Formstabilität, insbesondere die Formstabilität in Längsrichtung des Grundkörpers, verbessert werden.

Das gezeigte Hybridrohr 1 eignet sich insbesondere für Anwendungen in Klimatisierungssystemen und Flugzeugklimaverrohrungen bei Flugzeugen, denn insbesondere durch die Verwendung des Kunststoffschaummaterials weist das Hybridrohr 1 im Vergleich zu herkömmlichen Rohren ein deutlich reduziertes Gewicht auf. Letzteres beruht insbesondere auch darauf, dass der Grundkörper außerhalb des als Laminat 3 ausgebildeten Bereichs laminatfrei ausgebildet sein kann, d. h. laminatfreie Oberflächenabschnitte O aufweisen kann. Laminatfreie Oberflächenbereiche O sind in den Figuren durchwegs mit dem Bezugszeichen O bezeichnet, wobei in den Figuren jeweils nicht sämtliche laminatfreien Oberflächenbereiche gekennzeichnet sind.

Ferner zeigt die aus dem Kunststoffschaummaterial hergestellte Wandung 4 thermisch isolierende Eigenschaften, so dass auf zusätzliche Maßnahme zur thermischen Isolation des Hybridrohrs verzichtet werden kann.

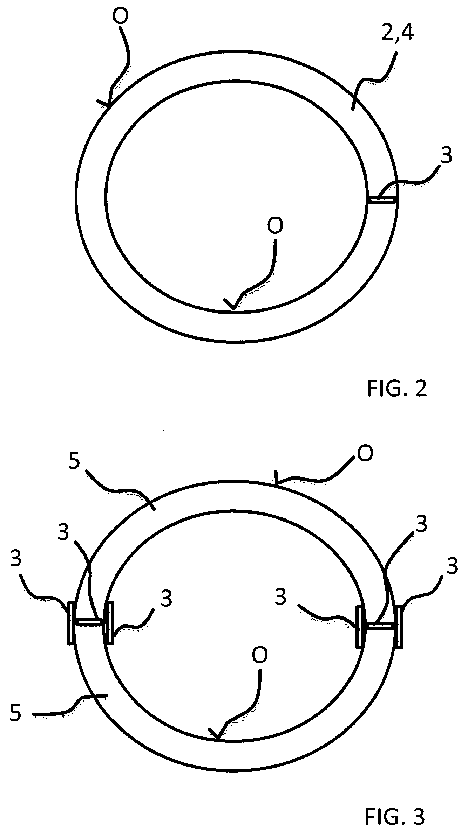

FIG. 2 zeigt eine Querschnittsdarstellung des Hybridrohrs 1. Aus der Querschnittsdarstellung ist die Struktur und Form des als Laminat 3 gebildeten Abschnitts deutlicher zu erkennen. In der vorliegenden Ausgestaltung sind die Enden bzw. Kanten des rohrförmig gebogenen Kunststoffschaumkörpers stumpf aneinandergestoßen, wobei sich das Faserverbundkunststoffmaterial zwischen den Enden bzw. Kanten angeordnet ist. Wie zu sehen ist, befindet sich das Faserverbundstoffmaterial und damit das sich bildende bzw. gebildete Laminat 3 lediglich zwischen den Enden des Kunststoffschaumkörpers. Außerhalb des Laminats 3 bzw. des als Laminat 3 ausgebildeten Abschnitts ist der Grundkörper 2 aus dem Kunststoffmaterial gebildet.

Durch das Laminat 3 werden bzw. sind die Enden bzw. Kanten miteinander verklebt. Eine entsprechende Verklebung ist durchaus ausreichend stabil für Klimatisierungs- und/oder Belüftungsanwendungen. Jedoch kann die Verklebung bei Bedarf noch stabiler und fester ausgestaltet werden, worauf nachfolgend im Zusammenhang mit Figuren 3 bis 5 noch genauer eingegangen wird.

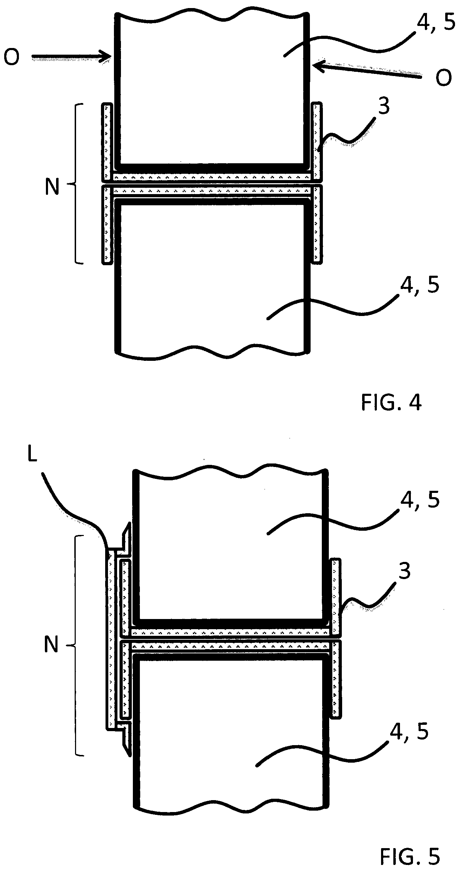

FIG. 3 zeigt eine Querschnittsdarstellung einer Variante des Hybridrohrs 1, und FIG. 4 zeigt einen Nahtstellenabschnitt, d. h. eine vergrößerte Darstellung der Nahtstelle N bzw. Verbindungsstelle des Hybridrohrs 1. Bei dieser Variante wird der Grundkörper 2 bzw. die Wandung 4 durch zwei Halbschalen 5 gebildet. Die Seitenkanten der Halbschalen 5 sind im vorliegenden Beispiel stumpf aneinander gestoßen und miteinander zu einem rohrförmigen Körper verbunden. Die Verbindung der Seitenkanten der Halbschalen umfasst im vorliegenden Beispiel mehrere als Laminat 3 ausgebildete Abschnitte, die je nach Ausbildung jedoch auch als ein zusammenhängender laminierter Abschnitt angesehen werden können.

Im Beispiel der FIG. 3 befindet sich Faserverbundkunststoffmaterial zwischen den aneinander gestoßenen Seitenkanten des Kunststoffschaummaterials. Zusätzlich, und im Unterschied zu FIG. 2 befindet sich Faserverbundkunststoffmaterial innen und außen an der Wandung 4 entlang der Stoßkanten der Halbschalen 5, wobei das Faserverbundkunststoffmaterial die Stoßkanten um eine vorgegebene Breite überdeckt. Insoweit befinden sich die als Laminat 3 ausgebildeten, und die Kunststoffschaumkörper miteinander verbindende Abschnitte zwischen den Stoßkanten und mit jeweils vorgegebenen, und im Wesentlichen frei wählbaren Breiten innen und außen entlang der Stoßkanten. Im vorliegenden Beispiel die die als Laminat 3 ausgebildeten Abschnitte so gewählt, dass sich eine im Wesentlichen symmetrische Anordnung ergibt. Das ist für die Formstabilität, insbesondere im Zusammenhang mit der Herstellung der Laminate 3, von besonderem Vorteil, da das Auftreten anisotroper Spannungen oder Verspannungen im Bereich der Laminate 3 vermieden werden kann.

Hier soll erwähnt werden, dass in einer Variante das zwischen den Stoßkanten der Halbschalen vorhandene Laminat 3 ersetzt oder ergänzt sein kann durch eine andere Verbindungsart, insbesondere durch eine Verklebung oder Klebenaht mit Klebstoff und/oder durch eine Verschweißung bzw. Schweißnaht.

Es soll bemerkt werden, dass die in FIG. 3 gezeigte Art der Verbindung auch verwendet werden kann, wenn das Hybridrohr, abgesehen von der Nahtstelle N, nur einen durchgehenden Kunststoffschaumkörper umfasst bzw. wenn das Hybridrohr 1 mehrere, jeweils Teilschalen ausbildende Kunststoffschaumkörper umfasst. Ferner soll angemerkt werden, dass entsprechende Verbindungen, insbesondere die Stoßverbindungen und/oder die Stoßnähte überdeckenden Verbindungen bei von Rohren verschiedenen Hybridbauteilen verwendet werden kann/können.

FIG. 5 zeigt einen Nahtstellenabschnitt bzw. die Nahtstelle N einer weiteren Variante des Hybridrohrs 1. Im Unterschied zu FIG. 3 und FIG. 4 ist an einer Seite des Grundkörpers im Bereich der Nahtstelle N eine weitere Lage L aus Faserkunststoffmaterial vorgesehen, welche die entsprechend den Ausgestaltungen der FIG. 3 und FIG. 4 bereits vorhandenen Lagen aus Faserkunststoffmaterial überdeckt. Durch die weitere Lage L aus Faserkunststoffmaterial kann die Verbindung im Bereich der Nahtstelle N weiter stabilisiert und gefestigt werden. Die weitere Lage L kann entweder an einer Innenseite des Grundkörpers 2 oder an einer Außenseite des Grundkörpers 2 vorgesehen werden. Alternativ ist es möglich, dass an der Innen- und auch an der Außenseite jeweils eine weitere Lage L vorhanden ist oder vorgesehen wird.

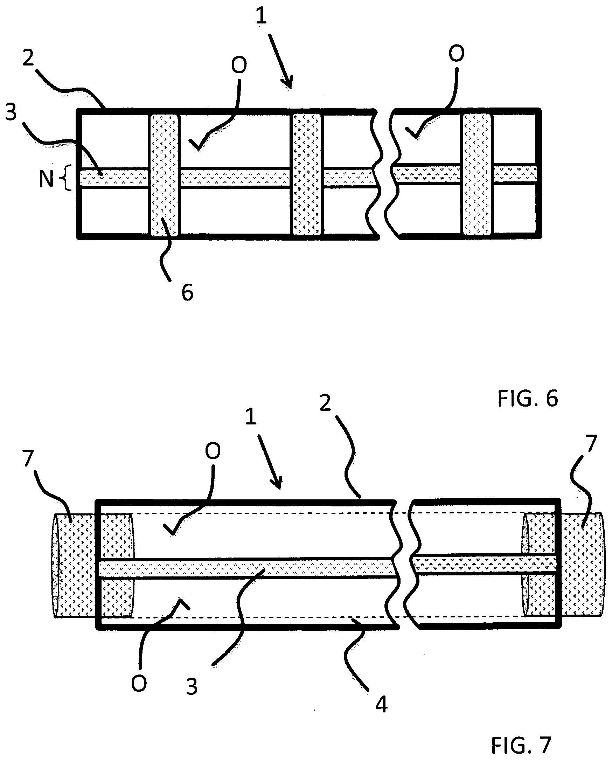

FIG. 6 zeigt eine Seitenansicht eines Abschnitts einer weiteren Variante des Hybridrohrs 1. Bei dem vorliegenden Hybridrohr 1 kann der als Laminat 3 ausgebildete Abschnitt im Bereich der Nahtstelle N entsprechend der in FIG. 3 bis 5 gezeigten Hybridrohre 1 ausgestaltet sein. Auch eine Ausgestaltung entsprechend der Variante nach FIG. 2 ist möglich. Im Unterschied, bzw. zusätzlich zu den bisher gezeigten Laminatbereichen 3 weist das Hybridrohr 1 der FIG. 6 weitere als Laminat ausgebildete Abschnitte, d. h. weitere Laminate 6 auf. Die weiteren Laminate 6 sind im vorliegenden Beispiel radial umlaufend um den Grundkörper 2 ausgebildet und dienen im Wesentlichen als mechanische Verstärkungen und Versteifungen des Grundkörpers in Umfangsrichtung. In den Bereichen der Laminate 3 und weiteren Laminate 6 ist die Flexibilität des Grundkörpers zu Gunsten der mechanischen Stabilität und Festigkeit eingeschränkt, während außerhalb der Laminate 3 bzw. weiteren Laminate 6 die Flexibilität des Kunststoffschaummaterials weniger bis gar nicht eingeschränkt ist. Insbesondere aus diesen Gründen kann ein ausreichend mechanisch stabiles und formstabiles Hybridbauteil bereit gestellt werden, welches im Hinblick auf die Endform und Endgeometrie nicht gänzlich starr, sondern in gewissen Grenzen noch flexibel ist.

FIG. 7 zeigt eine Seitenansicht eines Abschnitts einer weiteren Variante des Hybridrohrs 1. Hingewiesen wird darauf, dass bei der weiteren Variante nach FIG. 7 die im Zusammenhang mit FIG. 2 bis FIG. 6 beschriebenen, jedoch in FIG. 7 nicht dargestellten und gezeigten Details und Merkmale je nach Bedarf einzeln oder in Kombination umgesetzt sein können.

Das Hybridrohr 1 der FIG. 7 unterscheidet sich von den bisher gezeigten Hybridrohren 1 im Wesentlichen darin, dass an den beiden Enden des Grundkörpers 2 jeweils ein Axialflansch 7 vorhanden ist. Die Axialflansche 7 sind gebildet aus Faserverbundkunststoffmaterialien in ausgehärteter Form. Die Axialflansche 7 ragen über die axialen Enden des Grundkörpers 2 hinaus, wobei die Überstehenden Flanschabschnitte mit weiteren Rohren oder Rohrleitungselementen verbunden werden können. Neben der Bereitstellung einer Verbindungsmöglichkeit zu weiteren Rohren oder Rohrleitungselementen bewirken die Axialflansche 7 auch eine mechanische Versteifung bzw. Verstärkung der axialen Enden des Kunststoffschaummaterials.

Die Axialflansche 7 sind im vorliegenden Beispiel mit der Innenseite der Wandung 4 verbunden, und zwar dadurch, dass das Faserverbundkunststoffmaterial der Axialflansche 7 mit dem Kunststoffschaummaterial durch Lamination miteinander verbunden sind. Insoweit sind im vorliegenden Beispiel an den Enden des Kunststoffschaumkörpers im Bereich der Überlappung mit dem Faserkunststoffmaterial der Axialflansche 7 als Laminat ausgebildete Abschnitte vorhanden. Es soll bemerkt werden, dass an Stelle eines Axialflansches 7 auch ein (nicht gezeigter) Radialflansch vorhanden sein kann.

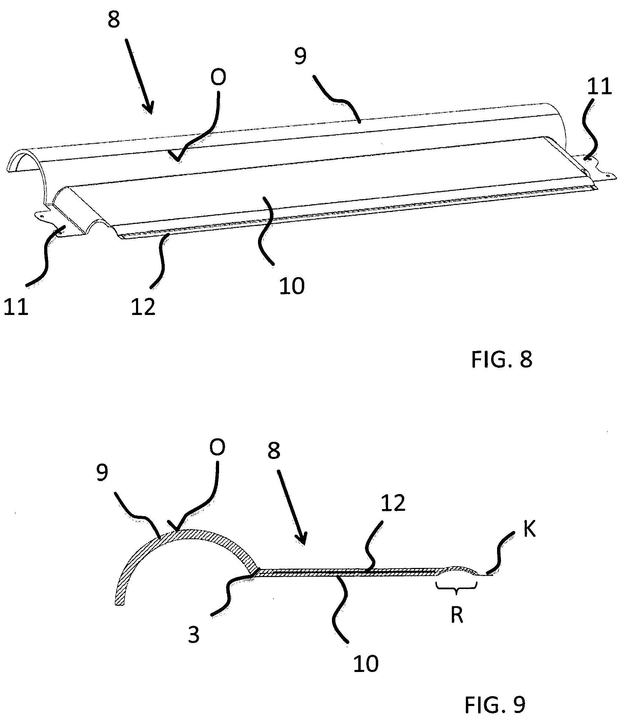

FIG. 8 zeigt eine perspektivische Ansicht eines Hybridbauteils 8. Das Hybridbauteil 8 ist ausgebildet als eine Halbschale zur Herstellung eines Luftauslasses einer Flugzeugkabinen-Klimatisierung. Das Hybridbauteil umfasst ein erstes Segment 9, das eine Rohrhalbschale ausbildet, und ein zweites Segment 10, welches sich an einer Längsseite des ersten Segments 9 anschließt und etwa plattenartig ausgebildet ist. An äußeren Kanten des zweiten Segments 10 sind Befestigungsflansche 11 vorhanden, während an der Längsseite des zweiten Segments 10 eine Luftströmungskante 12 ausgebildet ist.

Wie insbesondere aus FIG. 9, welche ist eine Schnittdarstellung des Hybridbauteils 8 der FIG. 8 gezeigt, zu sehen ist, sind das erste Segment 9 und das zweite Segment 10 durch ein Laminat 3 mit einem Faserverbundkunststoff miteinander verbunden. Zu dieser Verbindung wird auf die obigen Ausführungen verwiesen, die hier analog gelten. Verbindungsvarianten, wie im Zusammenhang mit dem Hybridrohr 1 gezeigt und beschrieben können hier ebenfalls Anwendung finden.

Das zweite Segment 10 weist einen Schichtaufbau auf, der zwei äußere Kunststoffschaumlagen und eine dazwischen angeordnete Zwischenlage 12 Faserverbundkunststoff umfasst. Die Kunststoffschaumlagen und die Zwischenlage sind durch Anwendung eines Laminationsprozesses miteinander verbunden. D.h. im Bereich des Schichtaufbaus ist ein als Laminat ausgebildeter Bereich vorhanden, der eine mechanische Verstärkung des ebenen, plattenartigen zweiten Segments 10 bewirkt.

In Anlehnung an den Aufbau des zweiten Segments 10, welches plattenartig aufgebaut ist, ist es im Rahmen der Erfindung denkbar, dass flächenhafte Hybridbauteile mit entsprechenden laminierten Verstärkungsbereichen hergestellt werden. Bei solchen flächenhaften Hybridbauteilen kann es sich beispielsweise um Innenverkleidungselemente, insbesondere Deckenverkleidungselemente für Flugzeugkabinen handeln. Auch können andere Innenausstattungselemente in ähnlicher Weise hergestellt werden, d. h. mit einem Kunststoffschaumkörper der laminierte Verstärkungs- und/oder Verbindungslagen aus Faserverbundkunststoffen aufweist. Ein Vorteil der Verwendung eines Kunststoffschaummaterials besteht auch darin, dass im Wesentlichen beliebig gekrümmte und beliebig geformte Bereiche bzw. Bauteile hergestellt werden können, die durch das Kunststoffschaummaterial bereits thermisch isoliert sind.

Aus FIG. 9 ist ferner ersichtlich, dass die vom ersten Segment 9 abgewandte Längsseite des zweiten Segments 10 einen Randbereich R aufweist, der im Vergleich zum restlichen Hybridbauteil 8, komprimiert ist, wodurch die Dicke des zweiten Segments 10 lokal, im Randbereich R, verringert wird bzw. ist. Die Dickenreduktion wird im Wesentlichen durch eine Komprimierung des Kunststoffschaumstoffmaterials erreicht, wobei das Kunststoffschaummaterial bei beim Laminationsprozess komprimiert wird, und nach Aushärten des Faserverbundkunststoffs die verringerte Dicke beibehält.

An den als Laminat ausgebildeten komprimierten Randbereich R schließt sich ein Kantenbereich K an, der ausschließlich aus Faserverbundkunststoff gebildet ist. Das bedeutet, dass der komprimierte Bereich, in welchem noch eine Hybridstruktur aus Kunststoffschaum und Faserverbundkunststoff vorliegt, zum Rand des zweiten Segments 10 hin in den rein aus Faserverbundkunststoff gebildeten Kantenbereich K übergeht, der im Unterschied zur Hybridstruktur auch als monolithisch bezeichnet werden kann. Der Kantenbereich K dient im vorliegenden Beispiel als Luftaustrittskante.

Bei dem für die beschriebenen Hybridbauteile 1, 8 verwendeten Kunststoffschaum kann es sich um einen thermoplastischen Schaum handeln. Dieser kann in einem oder mehreren Zuschnitten in ein entsprechend der Endkontur des Hybridbauteils geformtes Werkzeug, insbesondere NDS-Werkzeug (NDS: Niederdruckschlauch), zusammen mit dem Faserverbundkunststoff, insbesondere Prepregs, eingelegt werden, und nach Schließen des Werkzeugs mit einem passenden Druckschlauch gegen das Werkzeug gepresst werden. Durch Beaufschlagung der Anordnung mit Temperatur kann dar Faserverbundkunststoff ausgehärtet werden, wobei gleichzeitig der Kunststoffschaum in die durch das Werkzeug gegebene Endkontur umgeformt wird.

Die Verbindung des Kunststoffschaummaterials, kann durch den Faserverbundkunststoff, durch Kleber und/oder Klebestreifen aktiviert werden, was bevorzugt während der Beaufschlagung mit Temperatur erfolgt. Möglich ist es auch, dass Zuschnitte aus Kunststoffschaummaterial vorab mittels Schweißen oder Kleben verbunden werden, und der so gebildete Kunststoffschaumkörper in einem nachfolgenden Prozess in die Endform gebracht und mit den Verstärkungen aus Faserverbundkunststoff versehen wird.

### Bezugszeichenliste

- 1: Hybridrohr
- 2: Grundkörper
- 3: Laminat
- 4: Wandung
- 5: Halbschale
- 6: weiteres Laminat
- 7: Axialflansch
- 8: Hybridbauteil
- 9: erstes Segment
- 10: zweites Segment
- 11: Flansch
- 12: Zwischenlage

- N: Nahtstelle
- L: weitere Lage
- R: Randbereich
- K: Kantenbereich
- O: laminatfreier Oberflächenabschnitt

## Patentansprüche

1. Hybridbauteil (1, 8) für Luftfahrzeuge, umfassend einen Grundkörper (2) mit zumindest einem Abschnitt, der als Laminat (3, 6) aus einem Kunststoffschaum und einem Faserverbundkunststoff gebildet ist und wobei der Grundkörper (2) zumindest einen, aus Kunststoffschaum gebildeten und laminatfrei ausgestalteten Oberflächenabschnitt umfasst, wobei der Kunststoffschaum luftdicht ausgebildet ist, wobei sich der Faserverbundkunststoff lokal und axial entlang einer Stoßfuge des Grundkörpers (2) erstreckt und wobei der Grundkörper (2) zumindest abschnittsweise rohrartig geformt ist, wobei in dem zumindest einen Abschnitt (3) aufeinander stoßende Kontaktflächen des Kunststoffschaums durch den zwischen den Kontaktflächen angeordneten Faserverbundkunststoff miteinander verklebt sind.

2. Hybridbauteil (1, 8) nach Anspruch 1, wobei der Grundkörper (2) außerhalb des zumindest einen Abschnitts (3, 6) im Wesentlichen aus dem Kunststoffschaum gebildet ist.

3. Hybridbauteil (1, 8) nach einem der Ansprüche 1 oder 2, wobei der Kunststoffschaum aus einem Plastomer gebildet ist, insbesondere aus PVDF, PPSU.

4. Hybridbauteil (1, 8) nach einem der Ansprüche 1 bis 3, wobei der Faserverbundkunststoff als Kunststoffmaterial ein Duromer umfasst und/oder als Fasern Glasfasern, Karbonfasern und/oder Aramidfasern umfasst, wobei die Fasern vorzugsweise als Gewebe, Gelege, Gestrick, Gittergewebe und/oder Vlies vorliegen.

5. Hybridbauteil (1, 8) nach einem der Ansprüche 1 bis 4, wobei die Schmelztemperatur des Kunststoffschaums größer ist als eine Aushärtungstemperatur des Duromers.

6. Hybridbauteil (1, 8) nach einem der Ansprüche 1 bis 5, wobei es sich bei dem Kunststoffschaum um ein geschlossenzelliges Schaummaterial handelt.

7. Hybridbauteil (1, 8) nach einem der Ansprüche 1 bis 6, wobei der Kunststoffschaum eine Dichte zwischen 30 kg/m3 und 75 kg/m3, bevorzugt zwischen 30 kg/m3 und 40 kg/m3 aufweist.

8. Hybridbauteil (8) nach einem der Ansprüche 1 bis 7, wobei der zumindest eine Abschnitt (3) ein Segment umfasst, bei welchem der Faserverbundkunststoff zwischen zwei Lagen aus Kunststoffschaum angeordnet ist.

9. Hybridbauteil (1, 8) nach einem der Ansprüche 1 bis 8, wobei der zumindest eine Abschnitt (3) zumindest ein Segment umfasst, in welchem der Kunststoffschaum zwischen zwei Lagen aus Faserverbundkunststoff angeordnet ist.

10. Hybridbauteil (1, 8) nach einem der Ansprüche 1 bis 9, wobei der Grundkörper (2) zwei, zu einem rohrartigen Hohlkörper zusammengesetzte Halbschalen (5) aus dem Kunststoffschaum umfasst, wobei die Halbschalen (5) durch den Faserverbundkunststoff miteinander verklebt sind.

11. Hybridbauteil (1, 8) nach einem der Ansprüche 1 bis 10, wobei der Faserverbundkunststoff in zumindest einer Dimension vollständig über die Ausdehnung des Grundkörpers (2) erstreckt.

12. Hybridbauteil (8) nach einem der Ansprüche 1 bis 11, wobei der Kunststoffschaum und/oder der Faserverbundkunststoff in dem zumindest ersten Abschnitt in Normalenrichtung des Grundkörpers (2) in der Dicke variiert, wobei bevorzugt der Kunststoffschaum komprimiert ist.

13. Hybridbauteil (1, 8) nach einem der Ansprüche 1 bis 12, wobei sich an zumindest einen als Laminat ausgebildeten Abschnitt (3, R) ein rein aus Faserverbundkunststoff gebildeter laminierter Bereich (K, 7) anschließt.

14. Hybridrohr (1) für Klimatisierungsanwendungen für Flugzeugkabinen, ausgebildet als Hybridbauteil (1) nach einem der Ansprüche 1 bis 13.

15. Kabinenverkleidungselement für Flugzeugkabinen, ausgebildet als Hybridbauteil nach einem der Ansprüche 1 bis 13.

16. Herstellungsverfahren für ein Hybridbauteil (1, 8) nach einem der Ansprüche 1 bis 13, wobei ein Kunststoffschaumelement und ein Faserverbundkunststoffelement in einem Laminationsprozess miteinander verbunden werden.

## Claims

1. Hybrid component (1, 8) for aircraft, comprising a basic element (2) having at least one portion which is formed as a laminate (3, 6) from a plastics foam and a fiber composite plastic, and wherein the basic element (2) comprises at least one surface portion which is formed from a plastics foam and is of laminate-free design, the plastics foam, wherein the plastics foam is of airtight configuration, wherein the fiber composite plastic extends locally and axially along a butt joint of the basic element (2), and wherein the basic element (2), at least in some sections, is tubular in shape, wherein, in the at least one portion (3), contact surfaces of the plastics foam which are mutually abutting are bonded together by the fiber composite plastic which is disposed between the contact surfaces.

2. Hybrid component (1, 8) according to Claim 1, wherein the basic element (2) is formed, outside of the at least one portion (3, 6), substantially from the plastics foam.

3. Hybrid component (1, 8) according to one of Claims 1 or 2, wherein the plastics foam is formed from a plastomer, in particular from PVDF, PPSU.

4. Hybrid component (1, 8) according to one of Claims 1 to 3, wherein the fiber composite plastic comprises as plastics material a duromer and/or as fibers glass fibers, carbon fibers and/or aramid fibers, wherein the fibers preferably exist in the form of woven fabric, bonded fabric, knitted fabric, lattice fabric and/or nonwoven fabric.

5. Hybrid component (1, 8) according to one of Claims 1 to 4, wherein the melting temperature of the plastics foam is greater than a curing temperature of the duromer.

6. Hybrid component (1, 8) according to one of Claims 1 to 5, wherein the plastics foam is constituted by a closed-cell foam material.

7. Hybrid component (1, 8) according to one of Claims 1 to 6, wherein the plastics foam has a density between 30 kg/m³ and 75 kg/m³, preferably between 30 kg/m³ and 40 kg/m³.

8. Hybrid component (8) according to one of Claims 1 to 7, wherein the at least one portion (3) comprises a segment in which the fiber composite plastic is disposed between two layers of plastics foam.

9. Hybrid component (1, 8) according to one of Claims 1 to 8, wherein the at least one portion (3) comprises at least one segment in which the plastics foam is disposed between two layers of fiber composite plastic.

10. Hybrid component (1, 8) according to one of Claims 1 to 9, wherein the basic element (2) comprises two half shells (5), which are made of the plastics foam and are put together to form a tubular hollow body, wherein the half shells (5) are bonded together by the fiber composite material.

11. Hybrid component (1, 8) according to one of Claims 1 to 10, wherein the fiber composite plastic extends in at least one dimension fully over the extent of the basic element (2).

12. Hybrid component (8) according to one of Claims 1 to 11, wherein the plastics foam and/or the fiber composite material, in the at least first portion, varies in thickness in the normal direction of the basic element (2), the plastics foam preferably being compressed.

13. Hybrid component (1, 8) according to one of Claims 1 to 12, wherein at least one portion (3, R) configured as a laminate is adjoined by a laminated region (K, 7) formed purely from fiber composite plastic.

14. Hybrid pipe (1), for air conditioning applications for aircraft cabins, configured as a hybrid component (1) according to one of Claims 1 to 13.

15. Cabin trim element for aircraft cabins, configured as a hybrid component according to one of Claims 1 to 13.

16. Method for producing a hybrid component (1, 8) according to one of Claims 1 to 13, wherein a plastics foam element and a fiber composite plastics element are connected to each other in a lamination process.

## Revendications

1. Composant hybride (1, 8) pour aéronefs, comprenant un corps de base (2) comprenant au moins une section, qui est formé par un stratifié (3, 6) d'une mousse en plastique et d'un plastique composite fibreux, le corps de base (2) comprenant au moins une section de surface formée par une mousse en plastique et configurée sans stratifié, la mousse en plastique étant configurée sous forme étanche à l'air, le plastique composite fibreux s'étendant localement et axialement le long d'un joint vertical du corps de base (2) et le corps de base (2) étant de forme tubulaire au moins en sections, des surfaces de contact adjacentes de la mousse en plastique étant collées les unes aux autres dans ladite au moins une section (3) par le plastique composite fibreux agencé entre les surfaces de contact.

2. Composant hybride (1, 8) selon la revendication 1, dans lequel le corps de base (2) est formé essentiellement par la mousse en plastique en dehors de ladite au moins une section (3, 6).

3. Composant hybride (1, 8) selon l'une quelconque des revendications 1 ou 2, dans lequel la mousse en plastique est formée par un plastomère, notamment en PVDF, PPSU.

4. Composant hybride (1, 8) selon l'une quelconque des revendications 1 à 3, dans lequel le plastique composite fibreux comprend un duromère en tant que matériau plastique et/ou des fibres de verre, des fibres de carbone et/ou des fibres d'aramide en tant que fibres, les fibres se présentant de préférence sous la forme d'un tissu, d'une nappe, d'un tricot, d'un treillis et/ou d'un non-tissé.

5. Composant hybride (1, 8) selon l'une quelconque des revendications 1 à 4, dans lequel la température de fusion de la mousse en plastique est supérieure à une température de durcissement du duromère.

6. Composant hybride (1, 8) selon l'une quelconque des revendications 1 à 5, dans lequel la mousse en plastique est un matériau en mousse à cellules fermées.

7. Composant hybride (1, 8) selon l'une quelconque des revendications 1 à 6, dans lequel la mousse en plastique présente une densité comprise entre 30 kg/m³ et 75 kg/m³, de préférence entre 30 kg/m³ et 40 kg/m³.

8. Composant hybride (8) selon l'une quelconque des revendications 1 à 7, dans lequel ladite au moins une section (3) comprend un segment dans lequel le plastique composite fibreux est agencé entre deux couches de mousse en plastique.

9. Composant hybride (1, 8) selon l'une quelconque des revendications 1 à 8, dans lequel ladite au moins une section (3) comprend au moins un segment dans lequel la mousse en plastique est agencée entre deux couches de plastique composite fibreux.

10. Composant hybride (1, 8) selon l'une quelconque des revendications 1 à 9, dans lequel le corps de base (2) comprend deux demi-coques (5) formant un corps creux tubulaire, en la mousse en plastique, les demi-coques (5) étant collées l'une avec l'autre par le plastique composite fibreux.

11. Composant hybride (1, 8) selon l'une quelconque des revendications 1 à 10, dans lequel le plastique composite fibreux s'étend dans au moins une dimension en totalité au-delà de la dimension du corps de base (2).

12. Composant hybride (8) selon l'une quelconque des revendications 1 à 11, dans lequel la mousse en plastique et/ou le plastique composite fibreux varient en épaisseur dans ladite au moins première section dans la direction normale du corps de base (2), la mousse en plastique étant de préférence comprimée.

13. Composant hybride (1, 8) selon l'une quelconque des revendications 1 à 12, dans lequel une zone stratifiée (K, 7) formée exclusivement par le plastique composite fibreux suit au moins une section (3, R) configurée sous la forme d'un stratifié.

14. Tube hybride (1) pour applications de climatisation pour cabines d'aéronefs, configurée sous la forme d'un composant hybride (1) selon l'une quelconque des revendications 1 à 13.

15. Élément de revêtement pour cabines d'aéronefs, configuré sous la forme d'un composant hybride selon l'une quelconque des revendications 1 à 13.

16. Procédé de fabrication d'un composant hybride (1, 8) selon l'une quelconque des revendications 1 à 13, dans lequel un élément mousse en plastique et un élément plastique composite fibreux sont reliés l'un avec l'autre lors d'un procédé de stratification.
